# EUROPÄISCHE PATENTSCHRIFT

(11) **EP 1 294 999 B1**
(45) Veröffentlichungstag und Bekanntmachung des Hinweises auf die Patenterteilung: **14.10.2009**
(21) Anmeldenummer: 01933534.8
(22) Anmeldetag: 07.06.2001
(51) Int. Cl.: E04H 15/50

(54) **SCHERENVERBINDUNG MIT VERBINDUNGSKÖRPER FÜR DEN DACHTRÄGER EINES ZUSAMMENKLAPPBAREN ZELTES**
SCISSOR-TYPE CONNECTOR WITH CONNECTOR BODY FOR THE ROOF SUPPORT OF A COLLAPSIBLE TENT
ASSEMBLAGE DU TYPE A CISEAUX AVEC CORPS D'ASSEMBLAGE POUR LE SUPPORT DE TOIT D'UNE TENTE PLIANTE

(30) Priorität: 08.06.2000 CH 112500
(43) Veröffentlichungstag der Anmeldung: 26.03.2003
(73) Patentinhaber: PATEA GmbH, 6300 Zug (CH)
(72) Erfinder: Heinz Stöckler, 8630 Rüti (CH)
(74) Vertreter: Schneider Feldmann AG Patent- und Markenanwälte
(86) Internationale Anmeldenummer: PCT/CH2001/000350
(87) Internationale Veröffentlichungsnummer: WO 2001/094725

(56) Entgegenhaltungen:
- WO-A-99/41473
- DE-A- 19 841 596
- US-A- 5 000 211

## Beschreibung

Die Erfindung betrifft eine Scherenverbindung an einem Tragerprofil für ein zusammenlegbares, bzw. zusammenklappbares Zelt gemäss dem Oberbegriff des ersten Patentanspruches.

Derartige Zelte sind z.B. in EP-A-0 514 574 beschrieben und beispielsweise unter der Bezeichnung bzw. dem Handelsnamen "Pro• Tent" bekannt. Eine Ausführung mit sechs Ecken ist in der CH-Patentanmeldung Nr. 0986/97 vom 02.05.97 beschrieben, für welche die vorliegende Verbindung ebenfalls bestimmt ist.

Bisher wurden Schrauben mit Muttern und Scheiben als Drehachsen benutzt, wobei diese Schraubenverbindung zwei Aufgaben erfüllten, nämlich die Verbindung der beiden Scherenträger aneinander sowie eine Drehbewegung der beiden Scherenträger relativ zueinander zu ermöglichen. Damit sich die Schrauben bei der Drehbewegung nicht von den Muttern lösten, wurden die Schrauben mit den Muttern verklebt. Für diese drehbare Verbindung wurden Spezialschrauben benötigt, die entsprechend teuer und schwer waren, weshalb das Gewicht der Schrauben mit Muttern und Scheiben für ein einziges Zelt mehrere kgs. betrugen. Die Montage dieser Schrauben erforderte einen grossen Zeitaufwand, bis der Drehvorgang zufriedenstellend war, was eine weitere Verteuerung bewirkte.

Da die Schraubenlöcher durch die beiden gegenüberliegenden Profilwände führten, wurden die viereckigen Profile an dieser Stelle empfindlich geschwächt. Diese Schwächung konnte bei starkem Wind sogar zu Brüchen führen.

Die Schraubenverbindungen schimmerten ferner bei dünnen Zeltdächern durch bzw. waren leicht sichtbar, was als unästhetisch empfunden wurde.

Um die erwähnten Nachteile der an sich bewährten Konstruktion zu beheben wurde eine Lösung gesucht, die in der CH-Patentanmeldung Nr. 2155/97 vom 12.09.97 bzw. in der DE-Anmeldung 198 41 596.6 beschrieben ist, welches Dokument Oberbegriffsgründend ist. Diese Ausführung benutzt einen relativ harten Wellenkörper, der radial in vier Teilen aufgeteilt ist. Diese Ausführung hat den Nachteil, das die Welle, obschon sie sich durch das vorgesehen Loch in der Schiene drücken lässt, leicht dazu neigt, sich aus dem Loch hinauszuarbeiten, so dass sich die Verbindung löst.

Die bisher verwendete viereckige Schiene hatte eine Höhe, die etwa das doppelte der Breite betrug. Es wurden nun nach Möglichkeiten gesucht, eine höhere Festigkeit ohne eine Erhöhung des Gewichtes der Schiene zu erreichen.

Aufgabe der Erfindung ist somit die Schaffung eines verbindungselementes einer Scherenverbindung, welche nicht die Nachteile der bisherigen Ausführung aufweist.

Eine Ausführung soll sowohl die Schiene als auch das Verbindungselement einschliessen, und dabei dauerhafter und stabiler sein als bisher, aber vor allem geht es um eine kostensparende Konstruktion, die in kürzester Zeit zusammensetzbar ist. Dabei bezweckt die gesuchte Lösung, eine Senkung der Montage- und Materialkosten auf einen Bruchteil der bisherigen Kosten.

Ein weiterer Zweck der gesuchten Lösung ist eine bedeutende Gewichtseinsparung der Scherenver bindung, gegenüber der bisherigen Ausführung. Die gesuchte Gewichtsreduktion ist deshalb wichtig, weil Zelte dieser Art immer wieder aufgestellt und zusammengeklappt werden. Da solche Zelte zudem in einer Tasche getragen werden, ist das Gewicht von entscheidender Bedeutung. Das Weglassen der bisher verwendeten Schrauben mit Muttern und Scheiben ist mit einer Gewichtsersparnis von mehreren kgs. Verbunden.

Es ist vorgesehen, das gesuchte Verbindungselement sowohl mit den bisher verwendeten Schienen als auch mit neu entworfenen Schienen zusammen zu verwenden.

Diese Aufgabe ist erfindungsgemäss durch die Merkmale im Kennzeichnungsteil des ersten Patentanspruches gelöst.

Ausführungsformen sind in den abhängigen Ansprüchen umschrieben.

Das Weglassen bisher verwendeter Schrauben mit Muttern und Scheiben ist mit einer Gewichtsersparnis von mehreren kgs. pro Zelt verbunden

Die gefundene Lösung ermöglicht sowohl eine starke Reduktion des Gewichtes als auch des Aufwandes zum Verbinden der beiden Schienen einer Schere bzw. deren Herstellungskosten.

Nachfolgend wird ein Ausführungsbeispiel der Scherenverbindung anhand der Zeichnung näher erläutert. Es zeigen
- Fig. 1: eine schematische Ansicht einer Verbindung zwischen zwei Schienen in axialer Richtung;
- Fig. 2: eine schematische Ansicht in der Richtung des Pfeiles II in Fig. 1, in grösserem Massstab;

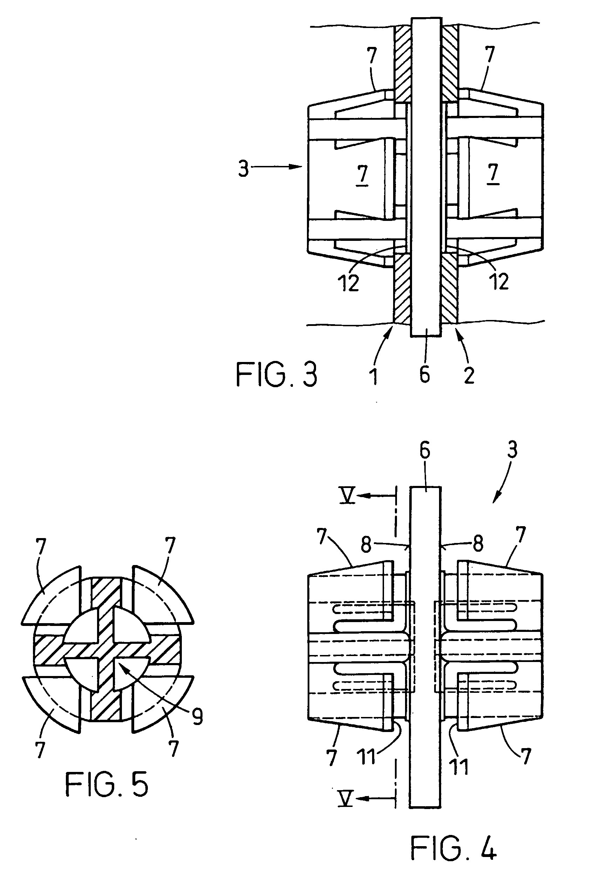

- Fig. 3: einen Auschnitt aus der Verbindungsstelle in Fig. 2;
- Fig. 4: eine Seitenansicht des Verbindungsteils nach Fig. 3;
- Fig. 5: einen Schnitt längs der Linie V-V in Fig. 4,

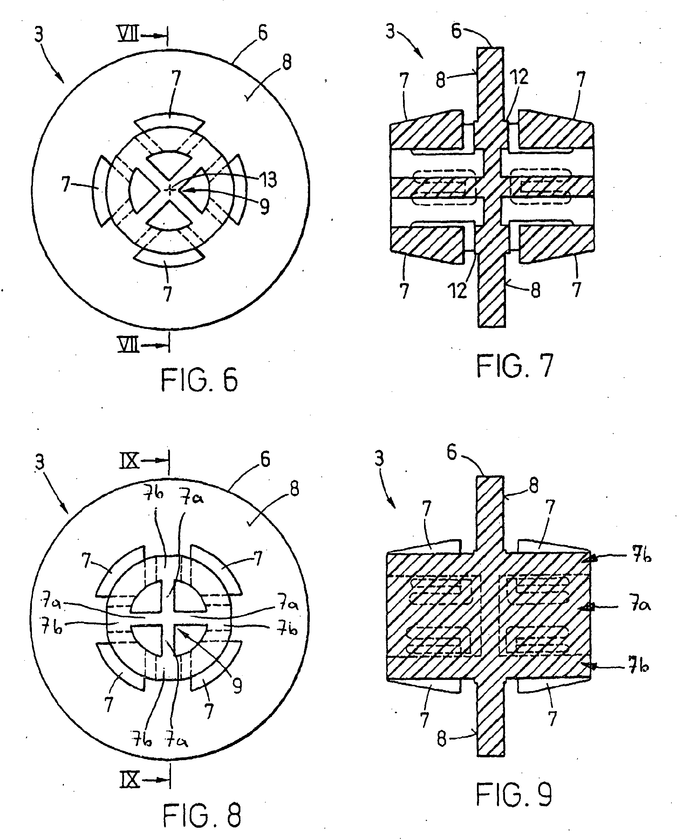

- Fig. 6: eine Endansicht des Verbindungsteils,
- Fig. 7: einen Schnitt längs der Linie VII-VII in Fig. 6,
- Fig. 8: eine Ansicht wie in Fig. 6, um 45° gedreht, und
- Fig. 9: einen Schnitt längs der Linie IX-IX in Fig. 8.

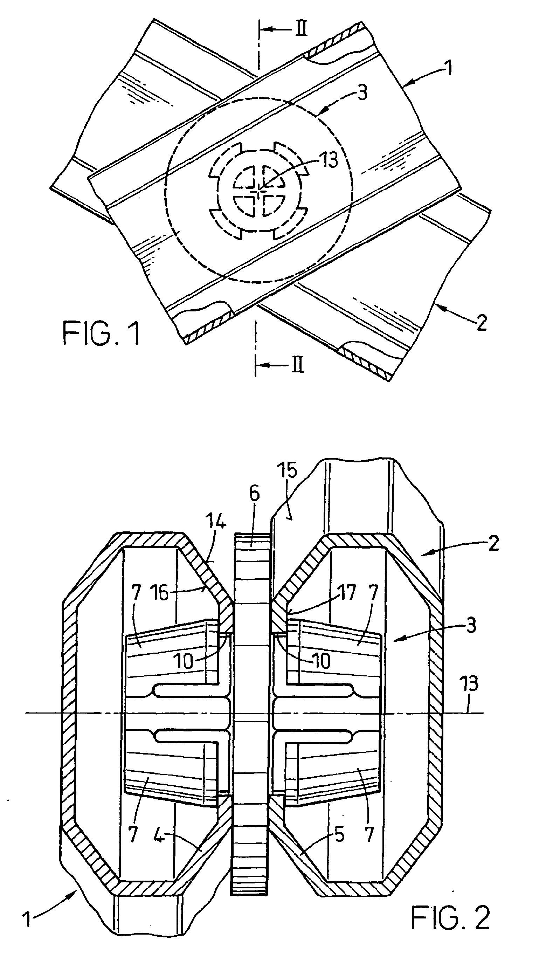

In Fig. 1 ist ein schematische Endansicht einer Verbindung zwischen zwei Schienen 1 und 2 mittels eines Verbindungskörpers 3, der jeweils die eine Wand 4, 5 der beiden Schienen 1,2 verbindet. Beidseits einer Mittelscheibe 6 hat der Verbindungskörper 3 jeweils vier einstückig mit ihm verbundene Federkörper 7. Am äusseren Ende befindet sich eine runde Scheibe 8, die in der Mitte mit einem Kreuz 9 zur Verstärkung versehen ist.

Bei der Montage der Scherenverbindung werden die beiden Schienen 1,2, die mit einem entsprechend dimensionierten Loch 10 versehen ist, von aussen über das Ende des Verbindungskörpers 1 geschoben, wobei die Federkörper 7 zusammengedrückt werden und sich nacher wieder aufrichten, so dass die Schienenwandung 4,5 zwischen der Mittelscheibe 6 und der Innerkante 11 der Federkörper 7 zu liegen kommt. Die Mittelscheibe 6 hat auf den beiden Seiten jeweils einen scheibenartigen Vorsprung 12, der etwa dem Innendurchmesser des Loches 10 in der Schiene 1,2 entspricht. Dieser scheibenartige Vorsprung 12 kann als Lager für die Schiene 1,2 beim Aufstellen und Zusammenschieben des Zeltes dienen.

Die Wirkungsweise des Verbindungskörpers 3 basiert auf die Tatsache, dass er aus einem federnden Material, normalerweise Kunststoff hergestellt ist, das erstens eine ausreichende Federeigenschaft und zweitens einen hohen Widerstand gegen Abnutzung durch Reibung aufweist. Gleichzeitig hat der Verbindungskörper I eine hohe Festigkeit, die verhindert, dass sich die Scherenverbindung beim Aufstellen und Zusammenlegen des Zeltes lösen kann.

Gegenüber bisherigen Ausführungen hat der beschriebene Verbindungskörper den Vorteil, dass er viel leichter und schneller zu montieren ist.

Der beschriebene Verbindungskörper ist zusammen mit den bisher üblicherweise benutzten, viereckigen Schienenprofil (12x24 mm) zusammen verwendbar, wobei im Gegensatz zu früher, nur ein Loch in einer Schienenwand benötigt wird, was die Festigkeit der Verbindung enorm erhöht.

Es wurde aber in Verbindung mit dem beschriebenen Verbindungskörper nach Möglichkeiten gesucht, ein Profil zu entwickeln, das eine höhere Festigkeit aufweist und trotzdem gleich schwer oder leichter ist als die bisherige, viereckige Schiene.

Dabei wurde festgestellt, dass ein achteckiges Profil bei gleichem Gewicht mit grösserer Oberfläche aber geringerer Wandstärke eine etwa 30% höhere Festigkeit (Flächenträgheitsmoment) aufweist als die als die viereckige Schiene. Es wird ferner darauf hingewiesen, dass die kritische Stelle für die Festigkeit bisher im Bereich der Löcher lag, die durch die einander gegenüberliegenden Wänden führten. Weil neuerdings, nur die eine Schienenwand mit einem Loch versehen ist, wird die Festigkeit an dieser kritischsten Stelle enorm erhöht.

Mit dem neuen Verbindungsteil und der neu konzipierten Schiene ist es möglich die Festigkeit an der kritischen Stelle um das mehrfache zu erhöhen.

Das Lösen einer bereits hergestellten Verbindung zwischen zwei Schienen ist ohne eine Zerstörung des Verbindungsteils fast nicht möglich, was aber nur mit einem geringen finanziellen Verlust verbunden ist.

Normalerweise werden die Schienen aus Leichtmetall - vorzugsweise Aluminium - hergestellt, jedoch ist auch eine Verwendung von Schienen aus Kunststoff möglich. Die Verbindungskörper sind vorzugsweise aus Kunststoff hergestellt, können aber z.B. auch aus Federstahl bestehen.

## Patentansprüche

1. Verbindungselement (3) zum Verbinden zweier relativ zueinander drehbarer Bauteile, nämlich Profile (1, 2) einer Scherenverbindung für zusammenklappbare Zelte, wobei das Verbindungselement beidseitig einer Mittelscheibe (6) Federkörper (7) hat, die rastbar in eine Öffnung der zu verbindenden Profile (1, 2) eingreifen, **dadurch gekennzeichnet, dass** eine Anzahl von Federkörpern (7) beidseitig jeweils an der der Mittelscheibe (6) entfernteren Seite über je ein Ringgebilde (7b) angeformt sind, wobei die Ringgebilden (7b) von einem beidseitig auf der Mittelscheibe angeordneten Kreuz (9) getragen werden.

2. Scherenverbindung für den Dachträger eines zusammenklappbaren Zeltes, mit zwei relativ zueinander um eine Achse drehbaren Profilen (1,2), wobei die Profile (1,2) mit einem Verbindungselement (3) nach Patentanspruch 1 miteinander verbunden sind, **dadurch gekennzeichnet, dass** das Profil (1,2) achtkantig ausgebildet ist.

3. Scherenverbindung nach Patentanspruch 2, **dadurch gekennzeichnet, dass** die Mittelscheibe (6) zur Herabsetzung der Reibung mit glatten Aussenflächen (8) versehen ist.

4. Scherenverbindung nach Patentanspruch 2 oder 3, **dadurch gekennzeichnet, dass** das Verbindungselement (3) beidseits der Mittelscheibe (6) jeweils vier Federkörper (7) aufweist.

5. Scherenverbindung nach einem der Patentansprüche 2 bis 4, **dadurch gekennzeichnet, dass** die Profile (1,2) aus Metall, vorzugsweise Aluminium, oder aus Kunststoff bestehen.

6. Scherenverbindung nach einem der Patentansprüche 2 bis 5, **dadurch gekennzeichnet, dass** eine Lagerhülse zwischen dem Umfang von Löchern (10) in den Profilen (1,2) und dem Verbindungselement (3) angeordnet ist.

7. Scherenverbindung nach einem der Patentansprüche 2 bis 6, **dadurch gekennzeichnet, dass** das Verbindungselement (3) aus einem federnden Kunststoff hergestellt ist.

8. Scherenverbindung nach Patentanspruch 7, **dadurch gekennzeichnet, dass** der Kunststoff durch Glasfasern oder Kohlenstoff verstärkt ist.

## Claims

1. Connector element (3) for connecting two components which can be rotated relative to each other, namely profiles (1, 2) of a scissor-type connector for collapsible tents, wherein the connector element has spring bodies (7) on both sides of a central disc (6), which spring bodies engage in a latching manner in an opening of the profiles (1, 2) to be connected, **characterised in that** a number of spring bodies (7) are integrally formed in each case on both sides on the side which is remote from the central disc (6) by means of in each case one ring shape (76), wherein the ring shapes (76) are borne by a cross (9) which is arranged on both sides of the central disc.

2. Scissor-type connector for the roof support of a collapsible tent, with two profiles (1, 2) which can be rotated relative to each other about an axis, wherein the profiles (1, 2) are connected to each other by means of a connector element (3) according to Patent Claim 1, **characterised in that** the profile (1, 2) has an octagonal configuration.

3. Scissor-type connector according to Claim 2, **characterised in that** the central disc (6) is provided with smooth outer surfaces (8) to reduce friction.

4. Scissor-type connector according to Claim 2 or 3, **characterised in that** the connector element (3) has in each case four spring bodies (7) on both sides of the central disc (6).

5. Scissor-type connector according to one of Claims 2 to 4, **characterised in that** the profiles (1, 2) consist of metal, preferably aluminium, or of plastic.

6. Scissor-type connector according to one of Claims 2 to 5, **characterised in that** a bearing bushing is arranged between the circumference of holes (10) in the profiles (1, 2) and the connector element (3).

7. Scissor-type connector according to one of Claims 2 to 6, **characterised in that** the connector element (3) is produced from a resilient plastic.

8. Scissor-type connector according to Claim 7, **characterised in that** the plastic is reinforced by glass fibres or carbon.

## Revendications

1. Elément d'assemblage (3) entre deux éléments de construction rotatifs l'un par rapport à l'autre, en particulier des profilés (1, 2) d'un assemblage en ciseaux pour tentes pliables, l'élément d'assemblage possédant des corps élastiques (7) des deux côtés d'un disque central (6), qui s'engagent par enclenchement dans une ouverture des profilés (1, 2) à assembler, **caractérisé en ce qu'**un certain nombre de corps élastiques (7) sont formés chacun par une structure d'anneau (76), du côté éloigné du disque central (6), les structures d'anneau (76) étant portées par une croix (9) disposée des deux côtés sur le disque central.

2. Assemblage en ciseaux pour barres de toit d'une tente pliable, avec deux profilés (1, 2) rotatifs l'un par rapport à l'autre autour d'un axe, les profilés (1, 2) étant reliés l'un à l'autre au moyen d'un élément d'assemblage (3) selon la revendication 1, **caractérisé en ce que** le profilé (1, 2) est conçu de façon octogonale.

3. Assemblage en ciseaux selon la revendication 2, **caractérisé en ce que** le disque central (6) est pourvu de surfaces extérieures lisses (8) afin de diminuer le frottement.

4. Assemblage en ciseaux selon l'une des revendications 2 ou 3, **caractérisé en ce que** l'élément d'assemblage (3) comporte quatre corps élastiques (7) de chaque côté du disque central (6).

5. Assemblage en ciseaux selon l'une des revendications 2 à 4, **caractérisé en ce que** les profilés (1, 2) sont conçus en métal, de préférence en aluminium, ou en plastique.

6. Assemblage en ciseaux selon l'une des revendications 2 à 5, **caractérisé en ce qu'**une douille de palier est disposée entre le pourtour d'orifices (10) dans les profilés (1, 2) et l'élément d'assemblage (3).

7. Assemblage en ciseaux selon l'une des revendications 2 à 6, **caractérisé en ce que** l'élément d'assemblage (3) est constitué d'un plastique élastique.

8. Assemblage en ciseaux selon la revendication 7, **caractérisé en ce que** le plastique est renforcé par des fibres de verre ou du carbone.
